# EUROPEAN PATENT SPECIFICATION

(11) **EP 3 243 736 B1**
(45) Date of publication and mention of the grant of the patent: **28.10.2020**
(21) Application number: 15882711.3
(22) Date of filing: 16.11.2015
(51) Int. Cl.: B63H 5/10, B63H 3/00, B63H 5/08, B63H 21/14, B63H 21/17, B63H 23/10, B63J 3/02, B63J 3/04, H02P 5/00, B60L 50/00, B60L 50/10, B63H 23/24, B63H 21/20, B63H 21/21

(54) **SHIP PROPULSION SYSTEM, SHIP, AND SHIP PROPULSION METHOD**
SCHIFFSANTRIEBSSYSTEM, SCHIFF UND SCHIFFSANTRIEBSVERFAHREN
SYSTÈME DE PROPULSION DE BATEAU, BATEAU ET PROCÉDÉ DE PROPULSION DE BATEAU

(30) Priority: 20.02.2015 JP 2015031546
(43) Date of publication of application: 15.11.2017
(73) Proprietor: Mitsubishi Shipbuilding Co., Ltd., Yokohama-shi Kanagawa 220-8401 (JP)
(72) Inventor: KUROIWA, Ryota, Tokyo 108-8215 (JP); YAMATO, Kuniaki, Tokyo 108-8215 (JP); ONZUKA, Masanori, Tokyo 108-8215 (JP)
(74) Representative: Henkel & Partner mbB
(86) International application number: PCT/JP2015/082100
(87) International publication number: WO 2016/132610

(56) References cited:
- WO-A1-94/14649
- WO-A1-2012/104303
- DE-C- 482 699
- JP-A- H0 733 084
- JP-A- 2011 148 399
- JP-A- 2013 193 503
- JP-A- 2014 501 201
- JP-A- 2015 003 658

## Description

### Technical Field

The present invention relates to a ship propulsion system, a ship, and a ship propulsion method.

### Background Art

In the related art, JP 2014-505621 A discloses a ship propulsion system that selects one of electric power generated by a shaft generator driven by a main engine (engine) for driving a main propeller in the ship that is provided with a contra rotating propeller system (CRP) and electric power generated by a main generator for supplying the electric power for use in a ship and supplies the selected electric power to a motor for driving a stern-side propeller.

When this ship propulsion system is used, the electric power that is generated by the shaft generator which is driven by the high-fuel economy main engine is supplied to the motor for the stern-side propeller during normal navigation. When the speed of the ship is required to be raised due to a delay in ship operation schedule or the like, this ship propulsion system does not use the shaft generator, the main engine is used only for the driving of the main propeller, and the stern-side propeller is driven by the electric power generated by the main generator. Accordingly, power serving propulsion can be increased and the speed of the ship can be raised.

JP 2013-193503 A discloses a ship propelling system and ship in which the main propellers are driven by two-cycle main gas-fired diesel engine using LNG as a fuel. This system also has generators for generating power with motive power of the gas-fired power generating diesel engines and auxiliary propelling devices for energizing the drive of the main propellers by power generated by the generators.

WO 2012/104303 A1 discloses an arrangement for steering and supplying propulsion power to a contra rotating propeller propulsion system in a marine vessel, which arrangement comprises a main propeller driven by a main rotating power unit that is e.g. a two-stroke diesel engine, and a second propeller driven by an AC motor, whereby the second propeller is rotated in the opposite direction as the first propeller, and an AC generator coupled to and driven by a mechanical output shaft of the main rotating power unit, whereby the AC generator is electrically connected to the AC motor. According to this arrangement the AC motor and the AC generator have the same electrical frequency. Another electrical power source in the form of plural AC generators driven by auxiliary rotating power units is electrically connectable to the AC motor parallel to the AC generator.

### Summary of Invention

### Technical Problem

In the case of this ship propulsion system, however, an increase in the speed of the ship that is assumed during the design of the ship entails an increase in the size of the main engine and an increase in initial cost. The larger the main engine, the wider the space it occupies in an engine room. This, in turn, results in a narrow maintenance space. Once the engine room is expanded for a maintenance space to be ensured, the engine room is flooded to a larger extent in the event of damage. In this case, the width of the ship should be increased for restoration performance to be ensured, and this exacerbates its propulsion performance and fuel economy.

The present invention provides a ship propulsion system as defined by claim 1, a ship as defined by claim 6, and a ship propulsion method as defined by claim 7 for addressing the problems described above.

### Solution to Problem

According to the present invention, a ship propulsion system includes a main generator supplying electric power into a ship, an electric power distribution unit distributing the electric power from the main generator, a first electric motor allowing a first rotary shaft to be driven to rotate by the electric power input via the electric power distribution unit, a main propeller rotating with the first rotary shaft, a second electric motor allowing a second rotary shaft to be driven to rotate by the electric power input via the electric power distribution unit, and a stern-side propeller placed on a stern side of the main propeller and rotating with the second rotary shaft.

According to the present invention, the ship propulsion system further includes a main engine allowing the first rotary shaft to be driven to rotate, in which the first electric motor compensates for a shortfall in the rotation of the main propeller attributable to the main engine by allowing the first rotary shaft to be driven to rotate.

According to the present invention, the first electric motor has a generator generating electric power from the rotation of the first rotary shaft attributable to output of the main engine and supplying the electric power to the electric power distribution unit, and the electric power distribution unit supplies the second electric motor with the electric power supplied by the first electric motor.

According to the present invention, the ship propulsion system further includes a control unit switching operations of the first electric motor, and the control unit switches between allowing the first rotary shaft to be driven to rotate by the first electric motor in response to thrust required for the ship and supplying electric power to the electric power distribution unit by generating the electric power from the rotation of the main engine.

According to a preferred aspect of the present invention, the main propeller is a controllable pitch propeller and the first electric motor is driven to rotate at a constant speed of rotation.

According to another preferred aspect of the present invention, the main propeller is a fixed pitch propeller.

In a further preferred aspect of the present invention, the single main propeller or a plurality of the main propellers and the single stern-side propeller placed to face each of the main propellers are provided.

In a further preferred aspect of the present invention, two units of the stern-side propeller axisymmetrically placed, about a rotational axis of the main propeller as an axis of symmetry, with respect to the single main propeller are provided.

According to a the present invention, a ship includes the ship propulsion system according to the invention described above.

According to the present invention, a ship propulsion method using the ship propulsion system of the invention includes allowing electric power to be supplied from a main generator supplying the electric power into a ship, allowing the electric power from the main generator to be distributed by an electric power distribution unit, allowing a first rotary shaft to be driven to rotate by a first electric motor by the electric power input via the electric power distribution unit, allowing a main propeller to be rotated with the first rotary shaft, allowing a second rotary shaft to be driven to rotate by a second electric motor by the electric power input via the electric power distribution unit, and allowing a stern-side propeller placed on a stern side of the main propeller to be rotated with the second rotary shaft.

### Advantageous Effects of Invention

According to the ship propulsion system, ship, and ship propulsion method described above, a high-performance ship propulsion system can be obtained that is capable of preventing an increase in the size of a main engine.

### Brief Description of Drawings

Fig. 1 is a first diagram illustrating an example of a ship propulsion system according to an embodiment of the present invention.
Fig. 2 is a second diagram illustrating an example of the ship propulsion system according to the embodiment of the present invention.
Fig. 3 is a third diagram illustrating an example of the ship propulsion system according to the embodiment of the present invention.
Fig. 4 is a fourth diagram illustrating an example of the ship propulsion system according to the embodiment of the present invention.
Fig. 5 is a fifth diagram illustrating an example of the ship propulsion system according to the embodiment of the present invention.
Fig. 6 is a sixth diagram illustrating an example of the ship propulsion system according to the embodiment of the present invention.
Fig. 7 is a seventh diagram illustrating an example of the ship propulsion system according to the embodiment of the present invention.
Fig. 8 is a diagram illustrating an example of a ship propulsion system according to an example serving to explain aspects of the present invention.

### Description of Embodiments

### < Embodiment>

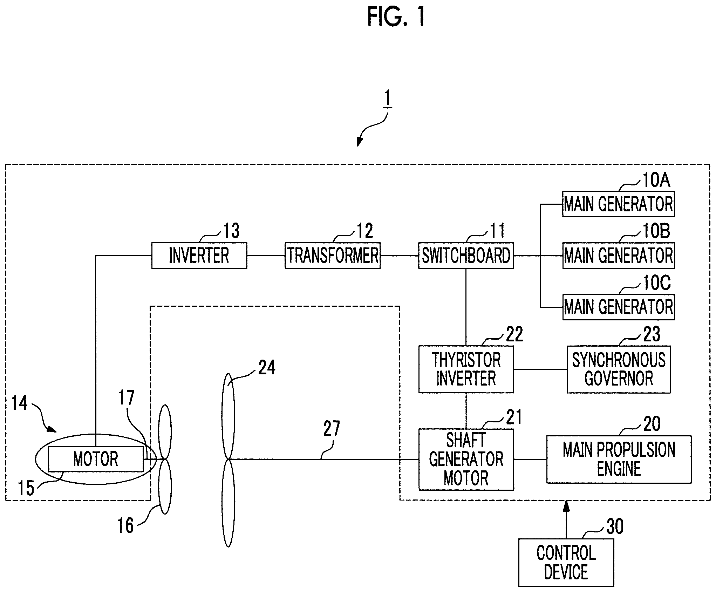

Hereinafter, a ship propulsion system according to a embodiment of the present invention will be described with reference to Figs. 1 to 7.

Fig. 1 is a first diagram illustrating an example of the ship propulsion system according to the embodiment of the present invention.

A ship propulsion system 1 is a ship propulsion system that is provided in a cargo ship, a passenger boat such as a ferry, or the like.

As illustrated in Fig. 1, the ship propulsion system 1 is provided with a main generator 10A, a main generator 10B, a main generator 10C, a switchboard 11, a transformer 12, an inverter 13, a pod propeller 14, a motor 15, a stern-side propeller 16, a main propulsion engine 20, a shaft generator motor 21, a thyristor inverter 22, a synchronous governor 23, and a control device 30. The main generators 10A to 10C are collectively referred to as a main generator 10.

The main generators 10A, 10B, and 10C are generators installed in the ship and supply electric power to facilities in the ship. The main generators 10A to 10C are connected to the switchboard 11.

The switchboard 11 is connected to the main generator 10A, the main generator 10B, the main generator 10C, the transformer 12, the thyristor inverter 22, and equipment (not illustrated) in the ship. The switchboard 11 performs opening and closing of an electric circuit and switching of electrical systems between the main generators 10A to 10C and the transformer 12, the thyristor inverter 22, and the equipment (not illustrated) in the ship. For example, the switchboard 11 distributes the electric power generated by the main generators 10A to 10C to the electrical systems supplying the electric power to the transformer 12 and the equipment in the ship. Under a predetermined condition, the switchboard 11 supplies the electric power to the thyristor inverter 22 as well as the transformer 12 and the equipment in the ship. Under a predetermined condition, the switchboard 11 supplies electric power generated by the shaft generator motor 21 (described later) to the transformer 12 and the equipment in the ship.

The transformer 12 steps down the voltage of the electric power output from the switchboard 11 to a predetermined voltage so that it can be supplied to the inverter 13.

The inverter 13 controls the voltage and frequency output by the transformer 12 at a desired voltage and a desired frequency so that the rotation speed of the stern-side propeller 16 reaches a desired rotation speed.

The pod propeller 14 is a cocoon-shaped propulsion device placed behind a main propeller 24. The pod propeller 14 is configured to be provided with the motor 15 and the stern-side propeller 16.

The motor 15 is an electric motor that is built into the pod propeller 14. The motor 15 is driven to rotate by the electric power that is controlled by the inverter 13.

The stern-side propeller 16 is coaxially connected to a rotary shaft of the motor 15 via a shaft 17 and rotates as a result of the driving of the motor 15. The stern-side propeller 16 is disposed on a stern side of the main propeller 24. The stern-side propeller 16 adds to thrust from the main propeller 24 or is used as a side thruster when the ship comes alongside a pier or moves away from it.

The main propulsion engine 20 is, for example, a diesel engine. The main propulsion engine 20 is connected to the main propeller 24 via a shaft 27. The main propulsion engine 20 rotates the main propeller 24 by allowing the shaft 27 to be driven to rotate. A gas turbine, a steam turbine, a nuclear turbine, an electric motor, or the like can be applied to the main propulsion engine 20 as a device for allowing the shaft 27 to be driven to rotate.

The shaft generator motor 21 is a device that is provided with a generator which generates electric power from the rotation of the shaft 27 resulting from output of the main propulsion engine 20 and a motor which is driven to rotate by the electric power generated by the main generator 10. The shaft generator motor 21 is disposed on the shaft 27. The shaft generator motor 21 may be placed on a stern side of the main propulsion engine 20 or may be placed on its bow side as well. A mode in which the shaft generator motor 21 is operated as a generator is called an electric power generation mode, and a mode in which the shaft generator motor 21 is operated as a motor is called an electric mode. The control device 30 switches the operating modes of the shaft generator motor 21 between the electric power generation mode and the electric mode in response to, for example, the thrust that is required for the ship.

A first gear, for example, is coaxially disposed on a rotary shaft of the shaft generator motor 21 with a second gear coaxially disposed on the shaft 27. The first gear is fitted with the second gear and the shaft generator motor 21 and the shaft 27 are connected to each other via these gears. When the shaft generator motor 21 is operated in the electric mode, the shaft generator motor 21 is driven to rotate by the electric power from the main generator 10, this rotation is transmitted to the second gear via the first gear, and the shaft 27 is rotated. In the case of the electric mode, not only rotational power from the main propulsion engine 20 but also rotational power from the shaft generator motor 21 is input to the shaft 27 and the rotational power from the main propulsion engine 20 and the rotational power from the shaft generator motor 21 rotate the main propeller 24 via the shaft 27. When the shaft generator motor 21 is operated in the electric mode, the power from the shaft generator motor 21 assists in the rotation of the main propeller 24 as described above.

When the shaft generator motor 21 is operated in the electric power generation mode, the shaft 27 is driven to rotate by the main propulsion engine 20, this rotation is transmitted to the first gear via the second gear, and the rotary shaft of the shaft generator motor 21 is rotated. When the shaft generator motor 21 is operated in the electric power generation mode, the shaft generator motor 21 generates electric power from the rotation of the shaft 27 as described above.

The thyristor inverter 22 is a constant frequency device for suppressing fluctuations in the frequency of the electric power that is generated by the shaft generator motor 21 or the electric power that is output from the switchboard 11 and stabilizing it.

The synchronous governor 23 is a device that controls the voltage and frequency of the electric power that is generated by the shaft generator motor 21 or the voltage and frequency of the electric power that is output from the switchboard 11. The thyristor inverter 22 and the synchronous governor 23 control the electric power generated by the shaft generator motor 21 and output it to the switchboard 11. The thyristor inverter 22 and the synchronous governor 23 control the electric power output from the switchboard 11 and output it to the shaft generator motor 21.

The main propeller 24 is connected to the main propulsion engine 20 via the shaft 27, is rotated by the shaft 27 being driven to rotate, and generates most of the thrust that is required for the ship to travel. When the shaft generator motor 21 is operated in the electric mode, the main propeller 24 is rotated by power assisted by not only the output of the main propulsion engine 20 but also the output of the shaft generator motor 21. According to Fig. 1, the main propeller 24 and the stern-side propeller 16 are provided to coaxially face each other and form a set of contra rotating propeller system (CRP).

The ship propulsion system 1 is provided with the main generator (main generators 10A, 10B, and 10C) supplying the electric power into the ship, the electric power distribution unit (switchboard 11) distributing the electric power of the main generator, the first electric motor (shaft generator motor 21) allowing the first rotary shaft (shaft 27) to be driven to rotate by the electric power input via the electric power distribution unit, the main propeller (main propeller 24) rotating with the first rotary shaft, the second electric motor (motor 15) allowing the second rotary shaft (shaft 17) to be driven to rotate by the electric power input via the electric power distribution unit, the stern-side propeller (stern-side propeller 16) placed on the stern side of the main propeller and rotating with the second rotary shaft, and the main engine (main propulsion engine 20) allowing the first rotary shaft to be driven to rotate. The first electric motor compensates for a shortfall in the rotation of the main propeller by the main engine by allowing the first rotary shaft to be driven to rotate. The control unit (control device 30) switches between allowing the first rotary shaft to be driven to rotate by the first electric motor in response to the thrust required for the ship and supplying electric power to the electric power distribution unit by generating the electric power from the rotation of the main engine.

Hereinafter, an example of the operation of the ship propulsion system 1 during ship propulsion will be described.

### (Operation Example 1)

The main generators 10A to 10C output the generated electric power to the switchboard 11, and the switchboard 11 outputs some of the input electric power to the equipment in the ship as intra-ship electric power. The switchboard 11 outputs some of the input electric power to the transformer 12. This electric power is supplied to the motor 15 through the transformer 12 and the inverter 13 and is used as electric power for driving the stern-side propeller 16. The main propulsion engine 20, in the meantime, rotates the main propeller 24 via the shaft 27. In operation example 1, the ship is propelled by the main propeller 24 being rotated by the output of the main propulsion engine 20 and the stern-side propeller 16 being rotated by the electric power supplied from the main generators 10A to 10C as described above.

### (Operation Example 2)

Another example of the operation of the ship propulsion system 1 during ship propulsion will be described below. As in the case of operation example 1, the electric power from the main generators 10A to 10C is used for the rotation of the stern-side propeller 16 and the equipment in the ship. The control device 30 operates the shaft generator motor 21 in the electric power generation mode on condition that, for example, the speed of the ship is equal to or less than a predetermined speed. As a result, the power from the main propulsion engine 20 is used for rotating not only the main propeller 24 but also the shaft generator motor 21. The shaft generator motor 21 is rotated with the shaft 27 by the output of the main propulsion engine 20 and generates electric power. The shaft generator motor 21 outputs the generated electric power to the switchboard 11 via the thyristor inverter 22. The control device 30 controls the switchboard 11 and switches the electrical systems for the electric power generated by the shaft generator motor 21 to be supplied to the transformer 12. The switchboard 11 outputs the electric power input from the shaft generator motor 21 to the transformer 12. The electric power input to the transformer 12 is output to the motor 15 via the inverter 13 and is used for the rotation of the stern-side propeller 16. In operation example 2, the electric power generated by the shaft generator motor 21 is used for the rotation of the stern-side propeller 16 as described above. As a result, the electric power generated by the main generators 10A to 10C can be preferentially allotted to the other equipment in the ship. Alternatively, energy can be saved by the electric power generated by the main generators 10A to 10C being reduced. The electric power generated by the shaft generator motor 21 may be used as electric power for the equipment in the ship.

This operation example 2 can be used in a scene where, for example, the ship does not require a large amount of thrust (a high speed is not required for the ship) and the output of the main propulsion engine 20 is enough for the rotation of the main propeller 24. In the case of a ship propulsion system that does not have the shaft generator motor 21, the main generators 10A to 10C need to be large or a larger number of the main generators 10 need to be provided in case the intra-ship electric power increases. In general, a high level of fuel economy is achieved when the main propulsion engine 20 has a high level of operation efficiency and the output of the main propulsion engine 20 is preferentially used. When it comes to the main generators 10A to 10C, in the meantime, power management is performed in many cases for control to reach the optimal number of units in operation in response to load situations. According to operation example 2 of the present embodiment, electric power generation by the shaft generator motor 21 can be performed by the use of the output of the main propulsion engine 20 and this electric power can be supplied, and thus an increase in the capacity of the main generator 10 can be prevented and initial costs can be reduced. In addition, energy can be saved by the number of the main generators 10 in operation being reduced.

### (Operation Example 3)

Yet another example of the operation of the ship propulsion system 1 during ship propulsion will be described below. As is the case with operation examples 1 and 2, the electric power from the main generators 10A to 10C is used for the rotation of the stern-side propeller 16 and the equipment in the ship. The output of the main propulsion engine 20 is used for the rotation of the main propeller 24. In addition, in this operation example 3, the control device 30 controls the switchboard 11 and performs electric power system switching for the electric power generated by the main generators 10A to 10C to be output to the thyristor inverter 22 on condition that, for example, the speed of the ship exceeds a predetermined speed. The electric power generated by the main generators 10A to 10C is supplied to the shaft generator motor 21 via the thyristor inverter 22 and the synchronous governor 23. The control device 30 operates the shaft generator motor 21 in the electric mode. By the shaft generator motor 21 being operated as the motor, the shaft generator motor 21 is driven to rotate by some of the electric power generated by the main generators 10A to 10C being used as its power source. The rotational power of the shaft generator motor 21 assists in the rotation of the main propeller 24 attributable to the output of the main propulsion engine 20. In other words, in operation example 3, some of the electric power generated by the main generators 10A to 10C is used for assisting in the propulsion of the main propeller 24 by the shaft generator being used as the motor.

This operation example 3 can be used in a scene where, for example, the ship requires a large amount of thrust and a high speed is required for the ship. In the case of a ship propulsion system that does not have the shaft generator motor 21, the main propulsion engine 20 that is provided for it needs to be large for the speed of the ship to be ensured. According to operation example 3 of the present embodiment, however, a shortfall in the rotational power of the main propulsion engine 20 can be compensated for by the rotational power of the shaft generator motor 21 attributable to the electric power generated by the main generators 10A to 10C and used for assisting in the propulsion of the main propeller 24. Accordingly, a large main propulsion engine 20 assuming an increase in the speed of the ship does not have to be provided, and thus initial costs can be reduced. By adding to an output for regular use (such as an output equivalent to 80% of a rated output), the main propulsion engine 20 is capable of yielding a high propulsion output with the output for regular use as it is. Accordingly, the load on the main propulsion engine 20 can be reduced and its exhaustion can be prevented, which leads to maintenance cost reduction. In a case where the main propulsion engine 20 has a trouble, the ship can be propelled by the main propeller 24 being rotated as a result of the operation of the shaft generator motor 21 in the electric mode.

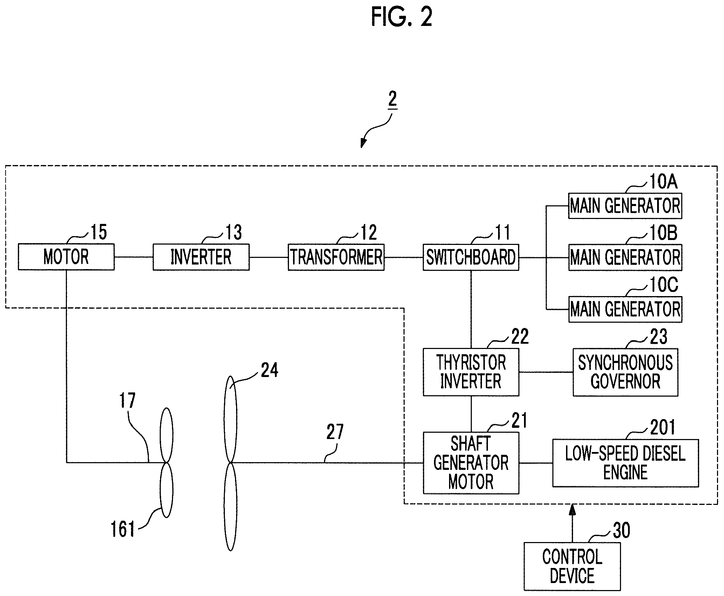

The ship propulsion system 1 according to the present embodiment can have the following configurations as illustrated in Figs. 2 to 7.

### (Single-engine Single-shaft CRP (FPP))

Fig. 2 is a second diagram illustrating an example of the ship propulsion system according to the embodiment of the present invention.

Illustrated in Fig. 2 is a ship propulsion system 2 that is configured to have one main propulsion engine and one main propeller. The ship propulsion system 2 illustrated in Fig. 2 is a contra rotating propeller-type propulsion system, in which its stern-side propeller and main propeller are disposed to face each other at coaxial positions in proximity to each other.

As illustrated in Fig. 2, the ship propulsion system 2 is provided with the main generators 10A, 10B, and 10C, the switchboard 11, the transformer 12, the inverter 13, the motor 15, an FPP 161, a low-speed diesel engine 201, the shaft generator motor 21, the thyristor inverter 22, the synchronous governor 23, and the main propeller 24.

In the ship propulsion system 2 illustrated in Fig. 2, the motor 15 is disposed not in the pod propeller but in the ship. The motor 15 transmits a rotation operation to the shaft 17 by means of a mechanical transmission mechanism (not illustrated) and rotates the FPP 161. The ship propulsion system 2 illustrated in Fig. 2 is provided with the fixed pitch propeller (FPP) 161 as an example of the stern-side propeller 16 and the low-speed diesel engine 201, which has a relatively low speed of rotation at a time of rate operation, as an example of the main propulsion engine 20. The rest of the configuration and operation (operation example 1 to operation example 3) of the ship propulsion system 2 illustrated in Fig. 2 is similar to the case of Fig. 1.

### (Single-engine Single-shaft CRP (CPP))

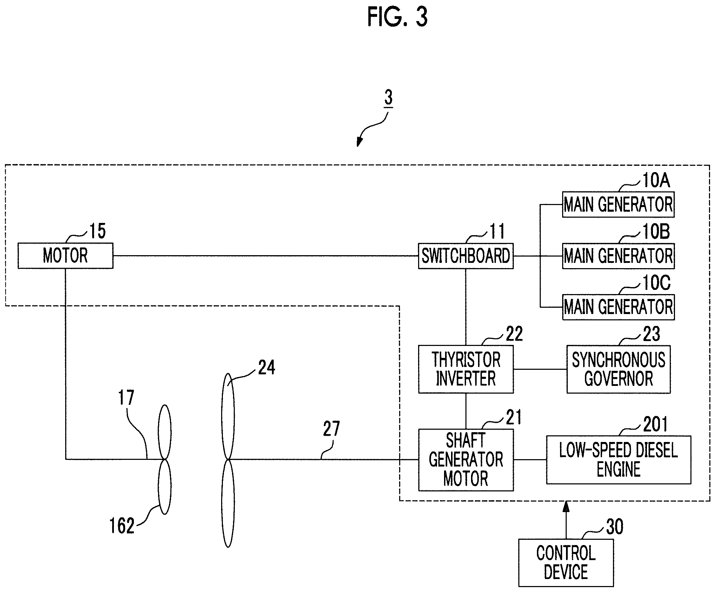

Fig. 3 is a third diagram illustrating an example of the ship propulsion system according to the embodiment of the present invention.

A ship propulsion system 3 illustrated in Fig. 3 is a contra rotating propeller-type propulsion system that is configured to have one main propulsion engine and one main propeller as is the case with Fig. 2.

As illustrated in Fig. 3, the ship propulsion system 3 is provided with the main generators 10A, 10B, and 10C, the switchboard 11, the motor 15, a CPP 162, the low-speed diesel engine 201, the shaft generator motor 21, the thyristor inverter 22, the synchronous governor 23, and the main propeller 24.

In the ship propulsion system 3 illustrated in Fig. 3, the motor 15 is disposed in the ship and the rotation operation is transmitted to the shaft 17 by the mechanical transmission mechanism (not illustrated) as is the case with the ship propulsion system 2 illustrated in Fig. 2. The ship propulsion system 3 illustrated in Fig. 3 is provided with the controllable pitch propeller (CPP) 162 as an example of the stern-side propeller 16 and the low-speed diesel engine 201 as an example of the main propulsion engine 20. The CPP 162 is capable of obtaining thrust required for a change in propeller pitch (blade angle) with a rotation speed remaining constant whereas the FPP 161 obtains thrust required for rotation speed control. Accordingly, in the case of the configuration illustrated in Fig. 3, the transformer 12 and the inverter 13 required for rotation speed control are not provided unlike in Fig. 2, in which the FPP is provided. The rest of the configuration and operation of the ship propulsion system 3 illustrated in Fig. 3 is similar to the case of Fig. 2.

### (Double-engine Single-shaft CRP (FPP))

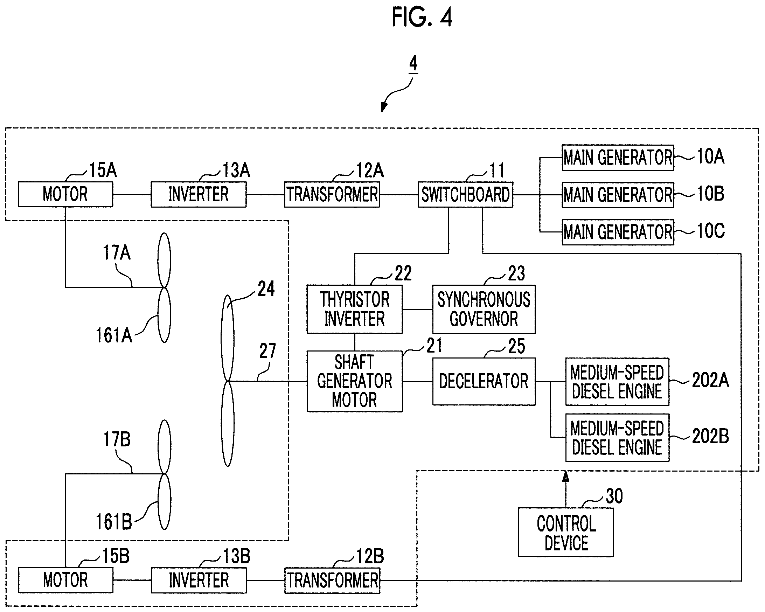

Fig. 4 is a fourth diagram illustrating an example of the ship propulsion system according to the embodiment of the present invention.

Illustrated in Fig. 4 is a ship propulsion system 4 that is configured to have two main propulsion engines and one main propeller. In the case of the configuration illustrated in Fig. 4, two stern-side propellers are axisymmetrically placed, about the rotational axis of the main propeller as an axis of symmetry, with respect to the single main propeller.

As illustrated in Fig. 4, the ship propulsion system 4 is provided with the main generators 10A, 10B, and 10C, the switchboard 11, a transformer 12A, a transformer 12B, an inverter 13A, an inverter 13B, a motor 15A, a motor 15B, an FPP 161A, an FPP 161B, a medium-speed diesel engine 202A, a medium-speed diesel engine 202B, the shaft generator motor 21, the thyristor inverter 22, the synchronous governor 23, the main propeller 24, and a decelerator 25.

The switchboard 11 is connected to the main generators 10A to 10C, the transformer 12A, the transformer 12B, and the thyristor inverter 22. The transformer 12A is connected to the inverter 13A, and the inverter 13A is connected to the motor 15A. The motor 15A is connected to a shaft 17A via a mechanical transmission mechanism. Likewise, the transformer 12B is connected to the inverter 13B and the inverter 13B is connected to the motor 15B. The motor 15B is connected to a shaft 17B via a mechanical transmission mechanism.

The decelerator 25 is connected to the medium-speed diesel engine 202A and the medium-speed diesel engine 202B. The decelerator 25 is connected to the main propeller 24 via the shaft 27. The medium speed of the medium-speed diesel engine 202 shows that its speed of rotation at a time of rated operation is moderate, and the decelerator 25 rotates the main propeller 24 with the speeds of rotation of the medium-speed diesel engine 202A and the medium-speed diesel engine 202B reduced. The shaft generator motor 21 is disposed on the shaft 27. The shaft generator motor 21 is connected to the thyristor inverter 22. The thyristor inverter 22 is connected to the synchronous governor 23.

The ship propulsion system 4 illustrated in Fig. 4 is provided with the two FPPs 161A and 161B as examples of the stern-side propeller 16 and the two medium-speed diesel engines 202A and 202B as examples of the main propulsion engine 20.

Hereinafter, the transformer 12A and the transformer 12B will be collectively referred to as the transformer 12. Likewise, the inverter 13A and the inverter 13B will be collectively referred to as the inverter 13. The motor 15A and the motor 15B will be collectively referred to as the motor 15. The FPP 161A and the FPP 161B will be collectively referred to as the FPP 161. The medium-speed diesel engine 202A and the medium-speed diesel engine 202B will be collectively referred to as the medium-speed diesel engine 202.

Description of the above-described operation examples 1 to 3 in the ship propulsion system 4 illustrated in Fig. 4 will be conducted below. In operation example 1, the electric power generated by the main generators 10A to 10C is supplied to the transformer 12A and the transformer 12B via the switchboard 11. In addition, the transformer 12A outputs the input electric power to the inverter 13A after converting the voltage of the input electric power. The inverter 13A outputs the input electric power to the motor 15A after controlling the frequency of the input electric power. The motor 15A rotates the FPP 161A via the shaft 17A. Likewise, the transformer 12B outputs the input electric power to the inverter 13B after converting the voltage of the input electric power. The inverter 13B outputs the input electric power to the motor 15B after controlling the frequency of the input electric power. The motor 15B rotates the FPP 161B via the shaft 17B. The decelerator 25 reduces the speed of rotation by inputting the output of the medium-speed diesel engine 202A and the output of the medium-speed diesel engine 202B and rotates the main propeller 24 via the shaft 27.

In the case of operation example 2, the control device 30 operates the shaft generator motor 21 in the electric power generation mode. The shaft generator motor 21 outputs the generated electric power to the thyristor inverter 22, and the thyristor inverter 22 outputs it to the switchboard 11. The synchronous governor 23 controls the voltage and frequency of the electric power that the thyristor inverter 22 outputs to the switchboard 11. The control device 30 switches the electrical systems of the switchboard 11 as described with reference to Fig. 1. The switchboard 11 outputs the electric power input from the thyristor inverter 22 to the transformer 12A and the transformer 12B. The electric power output to the transformer 12A and the electric power output to the transformer 12B are used as power sources for the FPP 161A and the FPP 161B, respectively. Alternatively, the switchboard 11 may use the electric power input from the thyristor inverter 22 as electric power for the facilities in the ship. As a result, the electric power generation capacity of the main generators 10A to 10C and the number of those in operation can be optimized.

In the case of operation example 3, the control device 30 operates the shaft generator motor 21 in the electric mode. The control device 30 switches the electrical systems of the switchboard 11 as described with reference to Fig. 1. The switchboard 11 outputs some of the electric power generated by the main generators 10A to 10C to the shaft generator motor 21 via the thyristor inverter 22, and the shaft generator motor 21 assists in the rotation of the main propeller 24 attributable to the main propulsion engine 20 by being driven to rotate.

In the case of the ship propulsion system 4 illustrated in Fig. 4, the FPP 161A and the FPP 161B are, for example, stern-side propellers disposed at azimuth propellers. The azimuth propeller is a propeller that has a function as a rudder as well as a ship propulsion function by the propeller itself rotating. The azimuth propeller can be used as a thruster as well. For example, not only can the azimuth propeller be used as a stern thruster when the ship comes alongside a pier or moves away from it, it also allows the ship to come alongside the pier or move away from it in a smooth manner in a narrow structure by facilitating hydraulic power adjustment in front-back and left-right directions because it is capable of performing a 360-degree turn. The ship propulsion system 4 illustrated in Fig. 4 is provided with two azimuth propellers along with the two medium-speed diesel engines 202, and thus it is capable of ensuring redundancy.

### (Double-engine Single-shaft CRP (CPP))

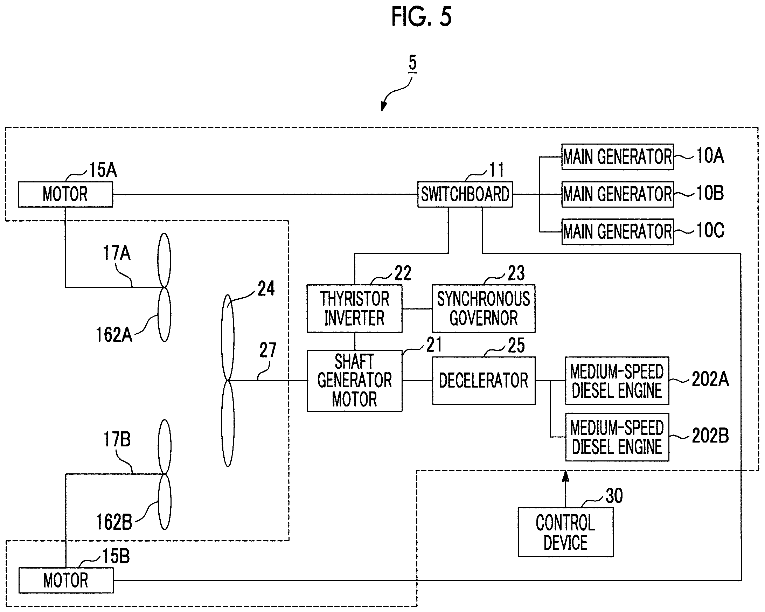

Fig. 5 is a fifth diagram illustrating an example of the ship propulsion system according to the embodiment of the present invention.

Illustrated in Fig. 5 is a ship propulsion system 5 that is configured to have two main propulsion engines and one main propeller as in Fig. 4.

As illustrated in Fig. 5, the ship propulsion system 5 is provided with the main generators 10A, 10B, and 10C, the switchboard 11, the motor 15A, the motor 15B, a CPP 162A, a CPP 162B, the medium-speed diesel engine 202A, the medium-speed diesel engine 202B, the shaft generator motor 21, the thyristor inverter 22, the synchronous governor 23, the main propeller 24, and the decelerator 25. The ship propulsion system 5 illustrated in Fig. 5 is provided with the two CPPs 162A and 162B as examples of the stern-side propeller 16 and the two medium-speed diesel engines 202A and 202B as examples of the main propulsion engine 20. The stern-side propeller in the ship propulsion system 5 illustrated in Fig. 5 is the CPP, and thus it is not provided with the transformer 12 and the inverter 13 unlike in Fig. 4.

The rest of the configuration and operation of the ship propulsion system 5 illustrated in Fig. 5 is similar to the case of Fig. 4.

### (Double-engine Double-shaft CRP (FPP))

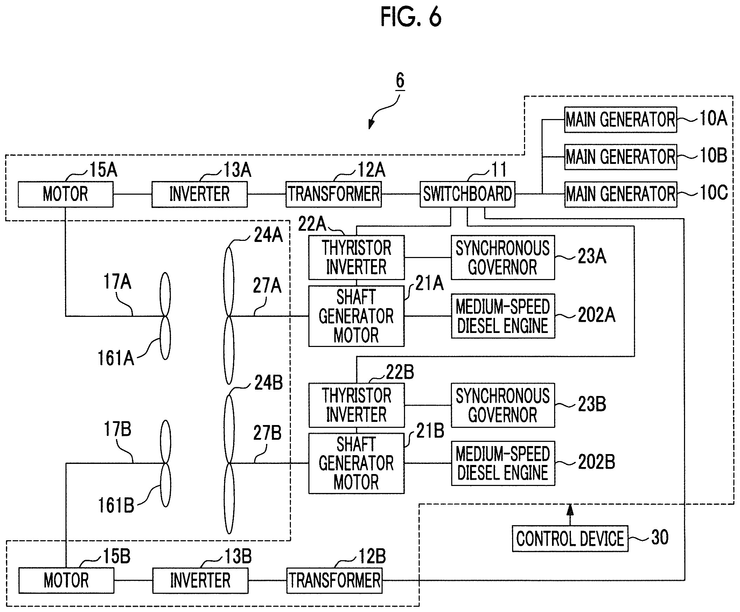

Fig. 6 is a sixth diagram illustrating an example of the ship propulsion system according to the embodiment of the present invention.

Illustrated in Fig. 6 is a ship propulsion system 6 that is configured to have two main propulsion engines and two main propellers.

As illustrated in Fig. 6, the ship propulsion system 6 is provided with the main generators 10A, 10B, and 10C, the switchboard 11, the transformer 12A, the transformer 12B, the inverter 13A, the inverter 13B, the motor 15A, the motor 15B, the FPP 161A, the FPP 161B, the medium-speed diesel engine 202A, the medium-speed diesel engine 202B, a shaft generator motor 21A, a shaft generator motor 21B, a thyristor inverter 22A, a thyristor inverter 22B, a synchronous governor 23A, a synchronous governor 23B, a main propeller 24A, and a main propeller 24B. The ship propulsion system 6 illustrated in Fig. 6 is provided with the two FPPs 161A and 161B as examples of the stern-side propeller 16 and the two medium-speed diesel engines 202A and 202B as examples of the main propulsion engine 20.

The switchboard 11 is connected to the main generators 10A to 10C, the transformers 12A and 12B, and the thyristor inverters 22A and 22B. The transformer 12, the inverter 13, the motor 15, and the FPP 161 have a connection relationship similar to that illustrated in Fig. 4. The medium-speed diesel engine 202A is connected to the main propeller 24A via a shaft 27A. The shaft generator motor 21A is disposed on the shaft 27A. The shaft generator motor 21A is connected to the thyristor inverter 22A. The thyristor inverter 22A is connected to the synchronous governor 23A. Likewise, the medium-speed diesel engine 202B is connected to the main propeller 24B via a shaft 27B. The shaft generator motor 21B is disposed on the shaft 27B. The shaft generator motor 21B is connected to the thyristor inverter 22B. The thyristor inverter 22B is connected to the synchronous governor 23B.

Hereinafter, the medium-speed diesel engine 202A and the medium-speed diesel engine 202B will be collectively referred to as the medium-speed diesel engine 202. The shaft generator motor 21A and the shaft generator motor 21B will be collectively referred to as the shaft generator motor 21. The thyristor inverter 22A and the thyristor inverter 22B will be collectively referred to as the thyristor inverter 22. The synchronous governor 23A and the synchronous governor 23B will be collectively referred to as the synchronous governor 23. The main propeller 24A and the main propeller 24B will be collectively referred to as the main propeller 24.

In a case where the operation according to the above-described operation example 1 is performed in the ship propulsion system 6 illustrated in Fig. 6, the electric power that is generated by the main generators 10A to 10C is supplied to the transformer 12A and the transformer 12B via the switchboard 11. In addition, the electric power with a voltage converted by the transformer 12A and the electric power with a voltage converted by the transformer 12B are supplied to the motor 15A and the motor 15B after frequency control by the inverter 13A and the inverter 13B, respectively. The motor 15A rotates the FPP 161A via the shaft 17A, and the motor 15B rotates the FPP 161B via the shaft 17B. The medium-speed diesel engine 202A rotates the main propeller 24A via the shaft 27A, and the medium-speed diesel engine 202B rotates the main propeller 24B via the shaft 27B.

In the case of operation example 2, the control device 30 operates the shaft generator motor 21A in the electric power generation mode. The shaft generator motor 21A generates electric power by being driven to rotate with the shaft 27A by the output of the medium-speed diesel engine 202A. The shaft generator motor 21A outputs the generated electric power to the thyristor inverter 22A. The thyristor inverter 22A outputs the input electric power to the switchboard 11. The synchronous governor 23A controls the voltage and frequency of the electric power that the thyristor inverter 22A outputs to the switchboard 11. Likewise, the shaft generator motor 21B is operated in the electric power generation mode and outputs the generated electric power to the thyristor inverter 22B. The thyristor inverter 22B outputs the input electric power to the switchboard 11. The control device 30 switches the electrical systems of the switchboard 11 as described with reference to Fig. 1. The switchboard 11 outputs the electric power input from the thyristor inverters 22A and 22B and some of the electric power input from the main generators 10A to 10C to the transformer 12A and the transformer 12B and uses them as power sources for the FPP 161A and the FPP 161B or the like.

In the case of operation example 3, the control device 30 switches the electrical systems of the switchboard 11 as described with reference to Fig. 1. The switchboard 11 outputs some of the electric power generated by the main generators 10A to 10C to the thyristor inverters 22A and 22B. The control device 30 operates the shaft generator motors 21A and 21B in the electric mode. The shaft generator motor 21A assists in the rotation of the main propeller 24A by being driven to rotate with the electric power input from the thyristor inverter 22A. Likewise, the shaft generator motor 21B assists in the rotation of the main propeller 24B by being driven to rotate with the electric power input from the thyristor inverter 22B.

The FPP 161A may be placed coaxially with the main propeller 24A and in proximity thereto, such that one set of contra rotating propeller system is realized, as illustrated in Fig. 6. Likewise, the FPP 161B and the main propeller 24B may be coaxially placed to constitute one set of contra rotating propeller system. In the case of Fig. 6, two sets of propulsion systems are provided based on the double-engine double-shaft configuration, and thus redundancy can be ensured. In addition, application of the ship propulsion system 6 according to the present embodiment allows the electric power generated by the main generator 10 to be used as a power source for the main propeller 24 or allows the electric power generated by the shaft generator motor 21 by the use of the power from the medium-speed diesel engine 202 to be used as a power source for the FPP 161, and thus power source redundancy can be improved.

### (Double-engine Double-shaft CRP (CPP))

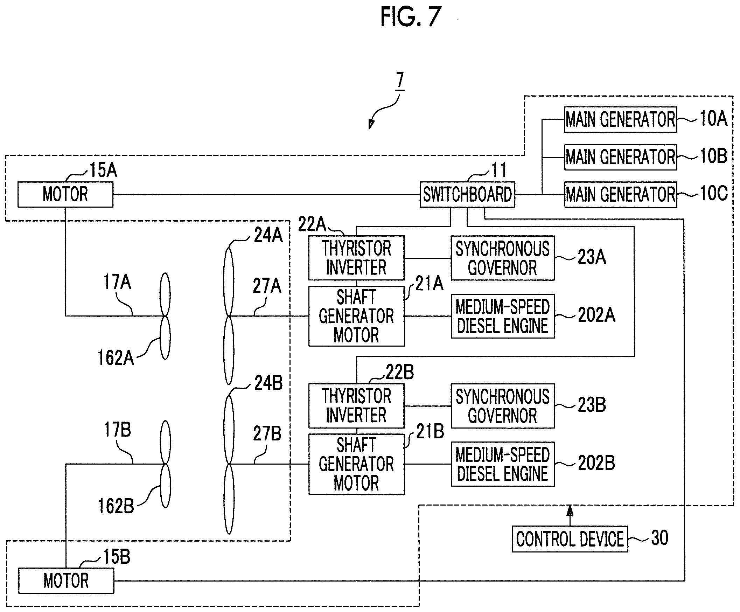

Fig. 7 is a seventh diagram illustrating an example of the ship propulsion system according to the embodiment of the present invention.

Illustrated in Fig. 7 is a ship propulsion system 7 that is configured to have two main propulsion engines and two main propellers as in Fig. 6.

As illustrated in Fig. 7, the ship propulsion system 7 is provided with the main generators 10A, 10B, and 10C, the switchboard 11, the motor 15A, the motor 15B, the CPP 162A, the CPP 162B, the medium-speed diesel engine 202A, the medium-speed diesel engine 202B, the shaft generator motor 21A, the shaft generator motor 21B, the thyristor inverter 22A, the thyristor inverter 22B, the synchronous governor 23A, the synchronous governor 23B, the main propeller 24A, and the main propeller 24B. The ship propulsion system 7 illustrated in Fig. 7 is provided with the two CPPs 162A and 162B as examples of the stern-side propeller 16 and the two medium-speed diesel engines 202A and 202B as examples of the main propulsion engine 20. In the case of Fig. 7, the transformer 12 and the inverter 13 are absent and the switchboard 11 is connected to the motor 15. The rest of the configuration and operation of the ship propulsion system 7 illustrated in Fig. 7 is similar to the case of Fig. 6.

According to the present embodiment, the output of the main propulsion engine 20 can be used as a power source for the stern-side propeller 16 and the main generator 10 can be operated in an energy-saving manner in a case where the main propulsion engine 20 has a surplus output while the main propeller 24 is driven by the use of the high-fuel economy and large-capacity main propulsion engine 20. When the power source of the main propeller 24 is insufficient, the electric power generated by the main generators 10A to 10C can be added to the power source of the main propeller 24. Even in a scene where the use of the main propulsion engine 20 is limited by a stormy weather, for example, a propulsion loss attributable to the stormy weather is reduced since the main propeller 24 can be rotated by the electric power from the main generators 10A to 10C.

Since the plurality of main generators 10 and main propulsion engines 20 are provided as the power sources for the main propeller 24 and the stern-side propeller 16, redundancy can be given and operation can still be performed even if any one of them fails.

Low-output navigation with the main propulsion engine 20 is likely to lead to problems in the form of soot accumulation, deterioration in terms of maintainability, and so on. However, since the plurality of main generators 10 is provided, the main generator 10 can be operated in compliance with an optimal output for navigation and at a control point of high fuel efficiency.

The configuration in which the motor 15 is disposed in the ship is illustrated as an example in Figs. 2 to 7. However, the motor 15 may be disposed in the pod propeller as in Fig. 1 instead. The number of the main generators 10 may not be three.

### <Example>

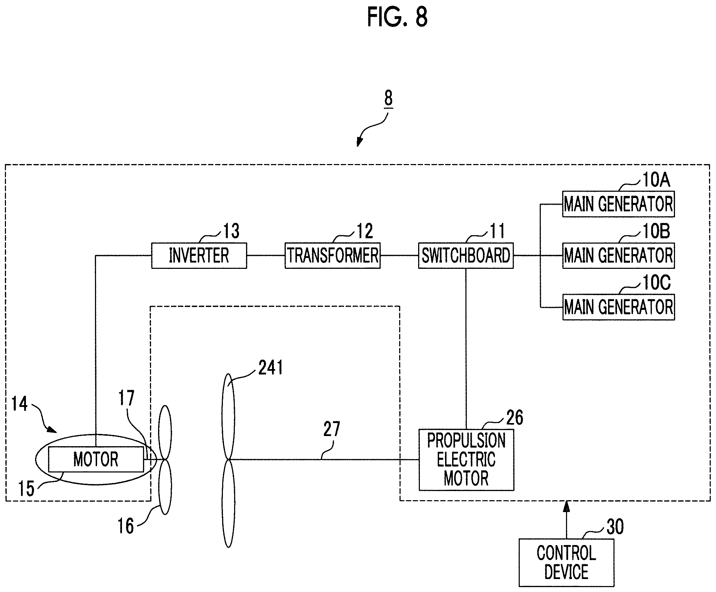

Hereinafter, the control device 30 according to an example serving to explain aspects of the present invention will be described with reference to Fig. 8. The same reference numerals will be used to refer to similar components of the embodiment, and detailed description thereof will be omitted.

Fig. 8 is a diagram illustrating an example of a ship propulsion system according to the example.

As illustrated in Fig. 8, a ship propulsion system 8 is provided with the main generators 10A, 10B, and 10C, the switchboard 11, the transformer 12, the inverter 13, the pod propeller 14, the motor 15, the stern-side propeller 16, a main propeller 241, and a propulsion electric motor 26.

The propulsion electric motor 26 is driven to rotate by the electric power generated by the main generator 10 via the switchboard 11 and rotates the main propeller 241. The propulsion electric motor 26 is, for example, a motor.

The main generators 10A to 10C are connected to the switchboard 11. The switchboard 11 is connected to the main generator 10A, the main generator 10B, the main generator 10C, the transformer 12, the propulsion electric motor 26, and the equipment (not illustrated) in the ship. The transformer 12 is connected to the inverter 13. The inverter 13 is connected to the motor 15 disposed in the pod propeller 14. The motor 15 is connected to the stern-side propeller 16 via the shaft 17. The propulsion electric motor 26 is connected to the main propeller 241 via the shaft 27. In the present example, the motor 15 and the propulsion electric motor 26 are driven to rotate by electric power supply from the main generator 10. The main propeller 241 is a CPP.

The ship propulsion system 8 is provided with the main generator (main generators 10A to 10C) supplying the electric power into the ship, the electric power distribution unit (switchboard 11) distributing the electric power of the main generator, the first electric motor (propulsion electric motor 26) allowing the first rotary shaft (shaft 27) to be driven to rotate by the electric power input via the electric power distribution unit, the main propeller (main propeller 241) rotating with the first rotary shaft, the second electric motor (motor 15) allowing the second rotary shaft (shaft 17) to be driven to rotate by the electric power input via the electric power distribution unit, and the stern-side propeller (stern-side propeller 16) placed on the stern side of the main propeller and rotating with the second rotary shaft.

An operation of the ship propulsion system 8 according to the example will be described. In the example, the main generator 10 is the only power source. The control device 30 calculates the electric power that allows the main propeller 241 to rotate, the electric power that allows the stern-side propeller 16 to rotate, and the electric power that is supplied to the facilities in the ship, and controls the output and the number of the main generators 10 in operation. The switchboard 11 supplies each system with the electric power generated by the main generator 10. The inverter 13 controls the frequency of the electric power input from the transformer 12 and rotates the motor 15 at a desired speed of rotation. The propulsion electric motor 26 is driven to rotate at a constant speed by the electric power input via the switchboard 11. The propulsion electric motor 26 rotates the main propeller 241 via the shaft 27. The main propeller 241 is the CPP, and the control device 30 performs control for desired thrust to be obtained through a change in the propeller pitch of the main propeller 241.

According to the present example, a system with less vibration and noise than ship propulsion systems provided with existing main propulsion engines, which include the embodiment, can be obtained. With propulsion systems based on low-speed diesel engines, for example, it is difficult to meet noise standards stipulated by law or the like. With the present example, however, noise reduction can be achieved.

Configurations such as the main propulsion engine 20 and the shaft generator motor 21 can be omitted in the present example, and thus the efficiency of equipment placement in an engine room can be improved along with work efficiency in the engine room.

Since the plurality of main generators 10 are provided as power sources, redundancy can be given and operation can still be performed even if any one of the main generators fails.

In the example, the motor 15 may be provided not in the pod propeller 14 but in the hull of the ship as in the embodiment. The stern-side propeller may be a CPP and the transformer 12 and the inverter 13 may be omitted as well. In addition, two units of the stern-side propeller 16 (FPP or CPP) may be provided with respect to the main propeller 241 as illustrated in Fig. 4. Also possible is a double-shaft configuration that is provided with two sets of CRPs, each of which has one set of main propeller 241 and stern-side propeller 16, as illustrated in Fig. 6. The main propeller may be an FPP, an inverter may be disposed between the switchboard 11 and the propulsion electric motor 26, and the rotation speed of the propulsion electric motor 26 may be controlled by the inverter in the example as well.

### Industrial Applicability

According to the ship propulsion system, ship, and ship propulsion method described above, a high-performance ship propulsion system can be obtained that is capable of preventing an increase in the size of a main engine. Reference Signs List
- 10: Main generator
- 11: Switchboard
- 12: Transformer
- 13: Inverter
- 14: Pod propeller
- 15: Motor
- 16: Stern-side propeller
- 17: Shaft
- 20: Main propulsion engine
- 21: Shaft generator motor
- 22: Thyristor inverter
- 23: Synchronous governor
- 24: Main propeller
- 25: Decelerator
- 26: Propulsion electric motor
- 27: Shaft
- 30: Control device
- 161: FPP
- 162: CPP
- 201: Low-speed diesel engine
- 202: Medium-speed diesel engine

## Claims

1. A ship propulsion system (1) comprising:
a plurality of main generators (10A-C) configured to supply electric power to facilities in a ship;
an electric power distribution unit (11) configured to distribute the electric power from the main generators (10A-C) ;
a main engine (20) configured to rotate a main propeller (24) by allowing a first rotary shaft (27) to be driven to rotate;
a first electric motor (21) configured to compensate for a shortfall in the rotation of the main propeller (24) by the main engine (20) by allowing the first rotary shaft (27) to be driven to rotate by the electric power distributed by the electric power distribution unit (11), the first electric motor (21) including a generator configured to generate electric power from the rotation of the first rotary shaft (27) resulting from output of the main engine (20) and to supply the electric power to the electric power distribution unit (11);
a second electric motor (15) allowing a second rotary shaft (17) to be driven to rotate by the electric power distributed by the electric power distribution unit (11);
a stern-side propeller (16) placed on a stern side of the main propeller (24) and arranged to rotate with the second rotary shaft (17); and
a control device (30) configured to control the first electric motor (21) to switch operations between allowing the first rotary shaft (27) to be driven to rotate by the first electric motor (21) in response to thrust required for the ship and supplying electric power to the electric power distribution unit (11) by generating the electric power from the rotation of the main engine (20), and
the control device (30) configured to control the electric power distribution unit (11) to distribute the electric power from the main generators (10A-C) to facilities in the ship, to the first electric motor (21), and to the second electric motor (15) when the first electric motor (21) drives to rotate the first rotary shaft (27), and to distribute the electric power from the main generators (10A-C) and the generated electric power from the generator of the first electric motor (21) to facilities in the ship and the second electric motor (15) when the first electric motor (21) generates the electric power.

2. The ship propulsion system (1) according to Claim 1,
wherein the main propeller (24) is a controllable pitch propeller (CCP), and
wherein the first electric motor (21) is configured to be driven to rotate at a constant speed of rotation.

3. The ship propulsion system (1) according to Claim 1,
wherein the main propeller (24) is a fixed pitch propeller (FPP).

4. The ship propulsion system (1) according to any one of Claims 1 to 3,
wherein the single main propeller (24) or a plurality of the main propellers and the single stern-side propeller (16) placed to face each of the main propeller (24) or main propellers are provided.

5. The ship propulsion system (1) according to any one of Claims 1 to 3,
wherein two units of the stern-side propeller (16) axisymmetrically placed, about a rotational axis of the main propeller (24) as an axis of symmetry, with respect to the single main propeller (24) are provided.

6. A ship comprising:
the ship propulsion system (1) according to any one of Claims 1 to 5.

7. A ship propulsion method using the ship propulsion system (1) according to any one of Claims 1 to 5, the method comprising:
allowing electric power to be supplied from the plurality of main generators (10A-C) supplying the electric power to facilities in a ship;
allowing the electric power from the main generators (10A-C) to be distributed by the electric power distribution unit (11);
allowing the first rotary shaft (27) to be driven to rotate by the first electric motor (21) by the electric power distributed by the electric power distribution unit (11);
allowing the main propeller (24) to be rotated with the first rotary shaft (27);
allowing the second rotary shaft (17) to be driven to rotate by the second electric motor (15) by the electric power distributed by the electric power distribution unit (11) ;
allowing the stern-side propeller (16) to be rotated with the second rotary shaft (17),
controlling, by means of the control device (30), the first electric motor (21) to switch operations between allowing the first rotary shaft (27) to be driven to rotate by the first electric motor (21) in response to thrust required for the ship and supplying electric power to the electric power distribution unit (11) by generating the electric power from the rotation of the main engine (20), and
controlling, by means of the control device (30), the electric power distribution unit (11) to distribute the electric power from the main generators (10A-C) to facilities in the ship, to the first electric motor (21), and to the second electric motor (15) when the first electric motor (21) drives to rotate the first rotary shaft (27), and to distribute the electric power from the main generators (10A-C) and the generated electric power from the generator of the first electric motor (21) to facilities in the ship and the second electric motor (15) when the first electric motor (21) generates the electric power.

## Patentansprüche

1. Ein Schiffsantriebssystem (1), umfassend:
eine Mehrzahl von Hauptgeneratoren (10A-C), die konfiguriert sind, um Einrichtungen in einem Schiff mit elektrischer Energie zu versorgen,
eine Verteilungseinheit für elektrische Energie (11), die konfiguriert ist, um die elektrische Energie von den Hauptgeneratoren (10A-C) zu verteilen,
eine Hauptantriebsmaschine (20), die konfiguriert ist, um einen Hauptpropeller (24) drehen, indem eine erste Drehwelle (27) zur Drehung angetrieben gelassen wird,
einen ersten Elektromotor (21), der konfiguriert ist, um ein Defizit in der Drehung des Hauptpropellers (24) durch den Hauptmotor (20) auszugleichen, indem die erste Drehwelle (27) durch die von der Verteilungseinheit für elektrische Energie (11) verteilte elektrische Leistung zur Drehung angetrieben gelassen wird, wobei der erste Elektromotor (21) einen Generator umfasst, der konfiguriert ist, um elektrische Leistung aus der Drehung der ersten Drehwelle (27), die aus der Ausgabe der Hauptantriebsmaschine (20) resultiert, zu erzeugen und die elektrische Leistung an die Verteilungseinheit für elektrische Energie (11) zu liefern,
einen zweiten Elektromotor (15), der es ermöglicht, eine zweite Drehwelle (17) durch die von der Verteilungseinheit für elektrische Energie (11) verteilte elektrische Leistung zur Drehung anzutreiben,
einen heckseitigen Propeller (16), der an einer Heckseite des Hauptpropellers (24) angeordnet und eingerichtet ist, um sich mit der zweiten Drehwelle (17) zu drehen, und
eine Steuervorrichtung (30), die konfiguriert ist, um den ersten Elektromotor (21) zu steuern, um Betriebszustände zwischen dem Ermöglichen, dass die erste Drehwelle (27) durch den ersten Elektromotor (21) als Reaktion auf den für das Schiff erforderlichen Schub zur Drehung angetrieben wird, und dem Liefern von elektrischer Energie an die Verteilungseinheit für elektrische Energie (11) durch Erzeugen der elektrischen Energie aus der Drehung der Hauptantriebsmaschine (20) umzuschalten,
wobei die Steuervorrichtung (30) konfiguriert ist, um die Verteilungseinheit für elektrische Energie (11) zu steuern, um die elektrische Energie von den Hauptgeneratoren (10A-C) an Einrichtungen in dem Schiff, an den ersten Elektromotor (21) und an den zweiten Elektromotor (15) zu verteilen, wenn der erste Elektromotor (21) zum Drehen der ersten Drehwelle (27) antreibt, und um die elektrische Energie von den Hauptgeneratoren (10A-C) und die erzeugte elektrische Energie von dem Generator des ersten Elektromotors (21) an Einrichtungen im Schiff und den zweiten Elektromotor (15) zu verteilen, wenn der erste Elektromotor (21) die elektrische Energie erzeugt.

2. Das Schiffsantriebssystem (1) nach Anspruch 1,
wobei der Hauptpropeller (24) ein Verstellpropeller (CCP) ist, und
wobei der erste Elektromotor (21) konfiguriert ist, um so angetrieben zu werden, dass er sich mit einer konstanten Rotationsgeschwindigkeit dreht.

3. Das Schiffsantriebssystem (1) nach Anspruch 1,
wobei der Hauptpropeller (24) ein Festpropeller (FPP) ist.

4. Das Schiffsantriebssystem (1) nach einem der Ansprüche 1 bis 3,
wobei der einzelne Hauptpropeller (24) oder eine Mehrzahl der Hauptpropeller und der einzelne heckseitige Propeller (16), der so angeordnet ist, dass er jedem von dem Hauptpropeller (24) oder den Hauptpropellern zugewandt ist, vorgesehen sind.

5. Das Schiffsantriebssystem (1) nach einem der Ansprüche 1 bis 3,
wobei zwei Einheiten des heckseitigen Propellers (16) in achsensymmetrischer Anordnung um eine Rotationsachse des Hauptpropellers (24) als Symmetrieachse in Bezug auf den einzelnen Hauptpropeller (24) vorgesehen sind.

6. Ein Schiff umfassend:
das Schiffsantriebssystem (1) nach einem der Ansprüche 1 bis 5.

7. Ein Schiffsantriebsverfahren unter Verwendung des Schiffsantriebssystems (1) nach einem der Ansprüche 1 bis 5, wobei das Verfahren umfasst:
Zulassen der Zufuhr von elektrischer Energie von der Mehrzahl von Hauptgeneratoren (10A-C), die die elektrische Energie liefern, zu Einrichtungen in einem Schiff,
Zulassen der Verteilung der elektrischen Leistung der Hauptgeneratoren (10A-C) durch die Verteilungseinheit für elektrische Energie (11),
Zulassen des Antriebs der ersten Drehwelle (27) durch den ersten Elektromotor (21) zur Drehung durch die von der Verteilungseinheit für elektrische Energie (11) verteilte elektrische Energie,
Zulassen der Drehung des Hauptpropellers (24) mit der ersten Drehwelle (27),
Zulassen des Antriebs der zweiten Drehwelle (17) zur Drehung durch den zweiten Elektromotor (15) durch die von der Verteilungseinheit für elektrische Energie (11) verteilte elektrische Leistung,
Zulassen der Drehung des heckseitigen Propellers (16) mit der zweiten Drehwelle (17),
Steuern, mittels der Steuervorrichtung (30), des ersten Elektromotors (21) zum Umschalten zwischen dem Zulassen des Antriebs der ersten Drehwelle (27)zur Drehung durch den ersten Elektromotor (21) als Reaktion auf den für das Schiff erforderlichen Schub und der Lieferung von elektrischer Energie an die Verteilungseinheit für elektrische Energie (11) durch Erzeugung der elektrischen Energie aus der Drehung der Hauptantriebsmaschine (20), und
Steuern, mittels der Steuervorrichtung (30), der Verteilungseinheit für elektrische Energie (11), zum Verteilen der elektrischen Energie von den Hauptgeneratoren (10A-C) an Einrichtungen indem Schiff, an den ersten Elektromotor (21) und an den zweiten Elektromotor (15), wenn der erste Elektromotor (21) die erste Drehwelle (27) zur Drehung antreibt, und zum Verteilen der elektrischen Energie von den Hauptgeneratoren (10A-C) und der erzeugten elektrischen Energie von dem Generator des ersten Elektromotors (21) an Einrichtungen im Schiff und den zweiten Elektromotor (15), wenn der erste Elektromotor (21) die elektrische Energie erzeugt.

## Revendications

1. Système (1) de propulsion d'un bâtiment de navigation, comprenant :
une pluralité de générateurs (10A-C) principaux, configurés pour fournir de l'électricité à des équipements du bâtiment de navigation ;
une unité (11) de distribution d'électricité, configurée pour distribuer l'électricité à partir des générateurs (10A-C) principaux ;
un moteur (20) principal, configuré pour faire tourner une hélice (24) principale en permettant à un premier arbre (27) tournant d'être entraîné en rotation ;
un premier moteur (21) électrique, configuré pour compenser un manque dans la rotation de l'hélice (24) principale par le moteur (20) principal, en permettant au premier arbre (27) tournant d'être entraîné en rotation par l'électricité distribuée par l'unité (11) de distribution d'électricité, le premier moteur (21) électrique ayant un générateur configuré pour produire de l'électricité à partir de la rotation du premier arbre (27) tournant provenant de la sortie du moteur (20) principal et pour fournir de l'électricité à l'unité (11) de distribution d'électricité ;
un deuxième moteur (15) électrique, permettant à un deuxième arbre (17) tournant d'être entraîné en rotation par l'électricité distribuée par l'unité (11) de distribution d'électricité ;
une hélice (16) du côté de la poupe, placée du côté de la poupe de l'hélice (24) principale et agencée pour tourner avec le deuxième arbre (17) tournant ; et
un dispositif (30) de commande, configuré pour commandé le premier moteur (21) électrique, afin de commuter des fonctionnements entre permettre au premier arbre (27) tournant d'être entraîné en rotation par le premier moteur (21) électrique, en réaction à une poussée requise pour le bâtiment de navigation, et fournir de l'électricité à l'unité (11) de distribution d'électricité, en produisant de l'électricité à partir de la rotation du moteur (20) principal, et
le dispositif (30) de commande étant configuré pour commander l'unité (11) de distribution d'électricité, afin de distribuer l'électricité des générateurs (10A-C) principaux à des équipements du bâtiment de navigation, au premier moteur (21) électrique et au deuxième moteur (15) électrique, lorsque le premier moteur (21) électrique entraîne pour faire tourner le premier arbre (27) tournant, et pour distribuer l'électricité à partir des générateurs (10A-C) principaux et l'électricité produite à partir du générateur du premier moteur (21) électrique à des équipements du bâtiment de navigation et au deuxième moteur (15) électrique, lorsque le premier moteur (21) électrique produit de l'électricité.

2. Système (1) de propulsion de bâtiment de navigation suivant la revendication 1,
dans lequel l'hélice (24) principale est une hélice (CCP) à pas réglable, et
dans lequel le premier moteur (21) électrique est configuré pour être entraîné en rotation à une vitesse de rotation constante.

3. Système (1) de propulsion de bâtiment de navigation suivant la revendication 1,
dans lequel l'hélice (24) principale est une hélice (FPP) à pas fixe.

4. Système (1) de propulsion de bâtiment de navigation suivant l'une quelconque des revendications 1 à 3,
dans lequel il est prévu l'hélice (24) principale unique ou une pluralité d'hélices principales et l'hélice (16) unique du côté de la poupe est placée de manière à faire face à chacune de l'hélice (24) principale ou des hélices principales.

5. Système (1) de propulsion de bâtiment de navigation suivant l'une quelconque des revendications 1 à 3,
dans lequel il est prévu deux unités de l'hélice (16) du côté de la poupe, placées symétriquement par rapport à un axe, autour d'un axe de rotation de l'hélice (24) principale comme axe de symétrie, par rapport à l'hélice (24) principale unique.

6. Bâtiment de navigation comprenant :
le système (1) de propulsion de bâtiment de navigation suivant l'une quelconque des revendications 1 à 5.

7. Procédé de propulsion d'un bâtiment de navigation en utilisant le système (1) de propulsion de navigation suivant l'une quelconque des revendications 1 à 5, le procédé comprenant :
permettre que de l'électricité soit fournie en provenance de la pluralité de générateurs (10A-C) principaux fournissant de l'électricité à des équipements du bâtiment de navigation ;
permettre que de l'électricité provenant des générateurs (10A-C) principaux soit distribuée par l'unité (11) de distribution d'électricité ;
permettre que le premier arbre (27) tournant soit entraîné en rotation par le premier moteur (21) électrique, par l'électricité distribuée par l'unité (11) de distribution d'électricité ;
permettre que l'hélice (24) principale soit entraînée en rotation par le premier arbre (27) tournant ;
permettre que le deuxième arbre (17) tournant soit entraîné en rotation par le deuxième moteur (15) électrique, par l'électricité distribuée par l'unité (11) de distribution d'électricité ;
permettre que l'hélice (16) du côté de la poupe soit entraînée en rotation par le deuxième arbre (17) tournant,
commander, au moyen du dispositif (30) de commande, le premier moteur (21) électrique pour commuter des fonctionnements entre permettre au premier arbre (27) tournant d'être entraîné en rotation par le premier moteur (21) électrique, en réaction à une poussée requise pour le bâtiment de navigation, et fournir de l'électricité à l'unité (11) de distribution d'électricité en produisant de l'électricité à partir de la rotation du moteur (20) principal, et
commander, au moyen du dispositif (30) de commande, l'unité (11) de distribution d'électricité pour distribuer l'électricité des générateurs (10A-C) principaux à des équipements du bâtiment de navigation, au premier moteur (21) électrique et au deuxième moteur (15) électrique, lorsque le premier moteur (21) électrique entraîne en rotation le premier arbre (27) tournant, et pour distribuer l'électricité des générateurs (10A-C) principaux et l'électricité produite à partir du générateur du premier moteur (21) électrique à des équipements du bâtiment de navigation et au deuxième moteur (15) électrique, lorsque le premier moteur (21) électrique produit de l'électricité.
